# EUROPEAN PATENT APPLICATION

(11) **EP 2 498 013 A2**
(43) Date of publication of application: **12.09.2012**
(21) Application number: 10826989.5
(22) Date of filing: 07.10.2010
(51) Int. Cl.: F24F 11/02, F24F 11/00, F24F 7/08

(54) **TOTAL HEAT EXCHANGE-TYPE VENTILATING APPARATUS, AND METHOD FOR CONTROLLING SAME**

(30) Priority: 02.11.2009 KR 20090104767
(71) Applicant: Kyung Dong Navien Co., Ltd., Pyoungtaek-si, Gyeonggi-do 450-818 (KR)
(72) Inventor: LEE, Ki Seong, Suwon-si Gyeonggi-do 443-725 (KR)
(74) Representative: Witzany, Manfred
(86) International application number: PCT/KR2010/006841
(87) International publication number: WO 2011/052904

(57) **Abstract**

The present invention relates to a total heat exchange-type ventilating apparatus and a method for controlling same, which detects indoor and outdoor temperatures and humidities, calculates indoor and outdoor enthalpies from the detected temperature and humidity information, and selectively operates in a heat exchange mode or in an outdoor air cooling mode through the result of comparing the magnitudes of the enthalpies, thereby controlling the indoor temperature and humidity to be maintained at comfortable levels. To accomplish this, the apparatus of the present invention comprises: a first exhaust chamber (30) and a second exhaust chamber (40); a first air supply chamber (10) and a second air supply chamber (20); a total heat exchanger (50) for exchanging heat between indoor air introduced from the first exhaust chamber (30) to the second exhaust chamber (40) and outdoor air introduced from the first air supply chamber (10) to the second air supply chamber (20); a bypass pipe (60) which forms an airflow channel for enabling outdoor air to be directly introduced into an indoor area without passing through the total heat exchanger (50) during a free cooling operation; a first temperature sensor (31)and a first humidity sensor (33) for sensing the temperature and humidity of the indoor air; a second temperature sensor (11) and a second humidity sensor (13) for sensing the temperature and humidity of the outdoor air; and a control unit (70) which calculates the enthalpies of the indoor air and outdoor air on the basis of the temperatures and humidities of the indoor air and outdoor air, compares the sizes of the enthalpies, and controls an outdoor air inflow path.

## Description

### [Technical Field]

The present invention relates to a total heat exchange type ventilating apparatus and a method of controlling the same, and more particularly, to a total heat exchange type ventilating apparatus which detects temperatures and humidities of indoor and outdoor areas, calculates enthalpies of the indoor and outdoor areas from detected temperature and humidity information, and selectively operates in a heat exchange mode or an outside air cooling mode through the result of comparing of the magnitudes of the enthalpies, making it possible to control the indoor temperature and humidity to be maintained at a comfortable level, and a method of controlling the same.

### [Background Art]

Cooling or heating apparatus is installed in a house or an office to cool or heat indoor areas as seasons change, and the cooling or heating apparatus includes an air conditioner, a boiler, and the like to cool or heat the indoor air.

A house or an office in where such cooling or heating apparatus is installed is maintained in a sealed state to enhance cooling or heating efficiency, however, the air in the sealed area becomes contaminated over time, causing stale air to be generated in the indoor area and foreign substances such as dust to remain in the air. Accordingly, the indoor air is ventilated to remove such stale air and dust from the indoor area, and a ventilating apparatus is used to exhaust contaminated indoor air to outdoor area more promptly and to supply fresh outdoor air into indoor area while maintaining indoor temperature.

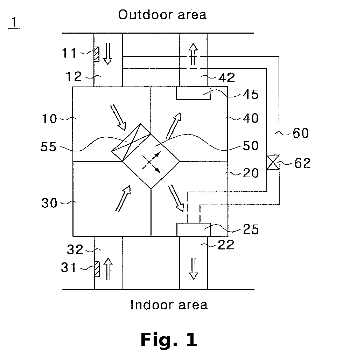

FIG 1 is a view of a total heat exchange type ventilating apparatus according to the conventional art.

The total heat exchange type ventilating apparatus 1 according to the conventional art comprises a first air supply chamber 10 into which outdoor air is introduced through an outdoor air suction opening 12, a second air supply chamber 20 into which the outdoor air introduced into the first air supply chamber 10 is introduced via a total heat exchanger after being purified by passing through a filter 55 to be supplied into an indoor area through the outdoor air exhaust opening 22, a first air exhaust chamber 30 into which indoor air is suctioned through an indoor air suction opening 32, and a second air exhaust chamber 40 from which the indoor air introduced into the first air exhaust chamber 30 is discharged to the outdoor area through the indoor air exhaust opening 42 via the total heat exchanger 50.

An air supplying blower 25 for compulsorily suctioning the outdoor air supplied in a direction to the outdoor air exhaust opening 22 is installed within the second air supply chamber 20, and an air exhausting blower 45 for compulsorily suctioning the indoor air exhausted in a direction to the indoor air exhaust opening 42 is installed within the second air exhaust chamber 40. A bypass pipe 60 forming an air passage is connected between the outdoor air suction opening 12 and the outdoor air exhaust opening 22 such that the outdoor air whose temperature is lower than the indoor air does not pass through the total heat exchanger 50 but is directly introduced into the indoor area during free cooling. A filter 62 for purifying the introduced outdoor air is installed in the passage of the bypass filter 60, and the bypass pipe 60 is connected to the air supplying blower 25.

Meanwhile, a first temperature sensor 31 for detecting a temperature of the indoor air is installed in the indoor air suction opening 32, and a second temperature sensor 11 for detecting a temperature of the outdoor air is installed in the outdoor air suction opening 12.

The above-described total heat exchange type ventilating apparatus 1 according to the conventional art supplies heat and moisture into the indoor area by using the total heat exchanger 50 to exchange sensible heat and latent heat.

The total heat exchange type ventilating apparatus 1 is more efficient in saving energy during winter and summer than during spring and fall.

However, in summer, the temperature of the outdoor area is lower than the temperature of the indoor area. And, the temperature of the indoor air can become higher than the temperature of the outdoor air when the heat is exchanged and this makes the people in the indoor area feel uncomfortable.

Thus, when the temperature of the outdoor air is lower than the temperature of the indoor air, the outdoor air can be directly introduced into the indoor area through the bypass pipe 60 without passing through the total heat exchanger 50 so that the indoor temperature can be lowered by a predetermined level by performing free cooling.

However, during the rainy season, the temperature of the outdoor air is lower than the temperature of the indoor area but the outdoor humidity is far higher than indoor humidity, so when free cooling is performed, humid air is introduced into the indoor area and this makes people in the indoor area feel uncomfortable.

Since the total heat exchange type ventilating apparatus 1 according to the conventional art compares a temperature of an indoor area detected by the first temperature sensor 31 and a temperature of an outdoor area detected by the second temperature sensor 11 and performs free cooling without exchanging heat when the temperature of the outdoor area is lower than the temperature of the indoor area, outdoor moisture may be directly introduced into the indoor area when the outdoor area is cool but humid during the rainy season and this makes the indoor area humid and damp.

### [Disclosure]

### [Technical Problem]

The present invention has been made in an effort to provide a total heat exchange type ventilating apparatus which considers the humidities of indoor and outdoor areas in addition to the temperatures of the indoor and outdoor areas, and controls outdoor air introduced into the indoor area to be selectively operated in a heat exchange mode or a free cooling mode, making it possible to regulate an indoor air condition to be more comfortable, and a method of controlling the same.

### [Technical Solution]

An exemplary embodiment of the present invention provides a total heat exchange type ventilating apparatus, comprising: a first air exhaust chamber 30 into which indoor air is introduced through an indoor air suction opening 32; a second air exhaust chamber 40 from which the indoor air that is passed through the first air exhaust chamber 30 is exhausted to the outdoor area through an indoor air exhaust opening 42; a first air supply chamber 10 into which outdoor air is introduced through an outdoor air suction opening 12; a second air supply chamber 20 from which the outdoor air that is passed through the first air supply chamber 10 is exhausted through an outdoor air exhaust opening 22; a total heat exchanger 50 exchanging heat between the indoor air introduced from the first air exhaust chamber 30 to the second air exhaust chamber 40 and the outdoor air introduced from the first air supply chamber 10 to the second air supply chamber 20; a bypass pipe 60 connected between the outdoor air suction opening 12 and the outdoor air exhaust opening 22 to form an air passage so that the outdoor air can be directly introduced into the indoor area without passing through the total heat exchanger 50 during free cooling; a first temperature sensor 31 for detecting a temperature of the indoor air and a first humidity sensor 33 for detecting a humidity of the indoor air; a second temperature sensor 11 for detecting a temperature of the outdoor air and a second humidity sensor 13 for detecting a humidity of the outdoor air; and a control unit 70 for calculating enthalpies of the indoor air and the outdoor air from the temperatures and humidity of the indoor air and the outdoor air, and comparing the magnitudes of the indoor and outdoor enthalpies to control an intake path of the outdoor air to be selected from a heat exchange mode or a free cooling mode.

The first temperature sensor 31 and the first humidity sensor 33 may be installed in an air passage of the indoor air suction opening 32, and the second temperature sensor 11 and the second humidity sensor 13 may be installed in an air passage of the outdoor air suction opening 12.

Another exemplary embodiment of the present invention provides a method of controlling a total heat exchange type ventilating apparatus, comprising: (1) detecting temperatures and humidities of indoor air and outdoor air; (2) calculating enthalpies of the indoor air and the outdoor air from the temperatures and humidities of the indoor air and the outdoor air; (3) comparing the magnitudes of the enthalpy of the indoor air and the enthalpy of the outdoor air; and (4) controlling such that in the result of comparing the magnitudes of the enthalpies, when the enthalpy of the indoor air is higher than the enthalpy of the outdoor air, free cooling where the outdoor air is directly introduced into an indoor area via a bypass filter 60 is performed, and when the enthalpy of the indoor air is higher than the enthalpy of the outdoor air, the outdoor air is heat-exchanged via a total heat exchanger 50 and is introduced into the indoor area.

The method may further comprise: determining whether a dew condensation condition of winter is satisfied, between step (2) and step (3). If the dew condensation condition is satisfied, the outdoor air is blocked from being introduced into the indoor area and the indoor air is allowed to be exhausted to the outdoor area.

If the dew condensation condition is not satisfied in determining whether the dew condensation condition of winter is satisfied, the method may further comprises: (A) determining whether it is summer; (B) determining whether the indoor area requires cooling; and (C) determining whether the indoor temperature is higher than the outdoor temperature. If all the conditions are satisfied in steps (A) to (C), free cooling may be performed, and if any one of the conditions is not satisfied in steps (A) to (C), the outdoor air may be introduced into the indoor area after exchanging heat.

### [Advantageous Effects]

The total heat exchange type ventilating apparatus and a method of controlling the same can calculate enthalpies from temperature and humidity conditions of indoor and outdoor areas, and controls outdoor air introduced into the indoor area by selectively operating in a heat exchange mode or a free cooling mode according to the result of comparing the enthalpies, making it possible to provide a more comfortable ventilation state to people in the indoor area.

### [Description of Drawings]

FIG 1 is a view of a total heat exchange type ventilating apparatus according to the conventional art.
FIG 2 is a view of a total heat exchange type ventilating apparatus according to the present invention.
FIG. 3 is a control block diagram of the total heat exchange type ventilating apparatus according to the present invention.
FIG 4 is a flowchart showing a method of controlling a total heat exchange type ventilating apparatus according to the present invention.

### <Explanation of Main Reference Numerals and Symbols>

1,100: Total heat exchange type ventilating apparatus
10: First air supply chamber
11: Second temperature sensor
12: Outdoor air suction opening
13: Second humidity sensor
20: Second air supply chamber
22: Outdoor air exhaust opening
25: Air supplying blower
30: First air exhaust chamber
31: First temperature sensor
32: Indoor air suction opening
33: First humidity sensor
40: Second air exhaust chamber
42: Indoor air exhaust opening
45: Air exhausting blower
50: Total heat exchanger
55, 62: Filter
60: Bypass filter
70: Control unit
80: Mode selecting unit
81: Heat exchange mode
82: Free cooling mode
S1: Detect temperatures and humidities of indoor and outdoor areas (T₁, H₁, T₂, H₂)
S2: Calculate enthalpies of indoor and outdoor areas (h₁, h₂)
S3: Determine whether dew condensation condition during winter is satisfied
S4: Block outdoor air exhaust opening and open indoor air exhaust opening
S5: Determine whether it is summer
S6: Heat exchange mode
S7: Determine whether indoor area requires cooling
S8: Determine whether indoor temperature is higher than outdoor temperature
S9: Determine whether indoor enthalpy is higher than outdoor enthalpy
S10: Free cooling mode

### [Best Mode]

Hereinafter, configurations and operations of exemplary embodiments of the present invention will be described in detail with reference to the accompanying drawings. Here, the same reference numerals are assigned to the same elements of the conventional art, and a detailed description of the repeated elements will be omitted.

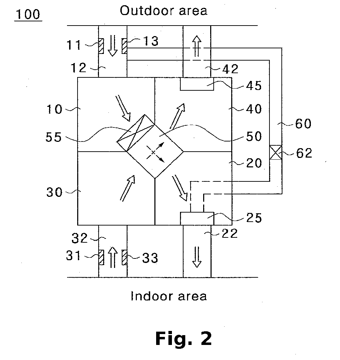

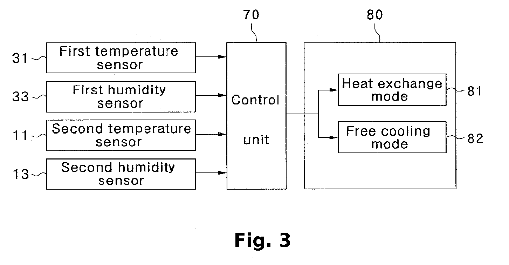

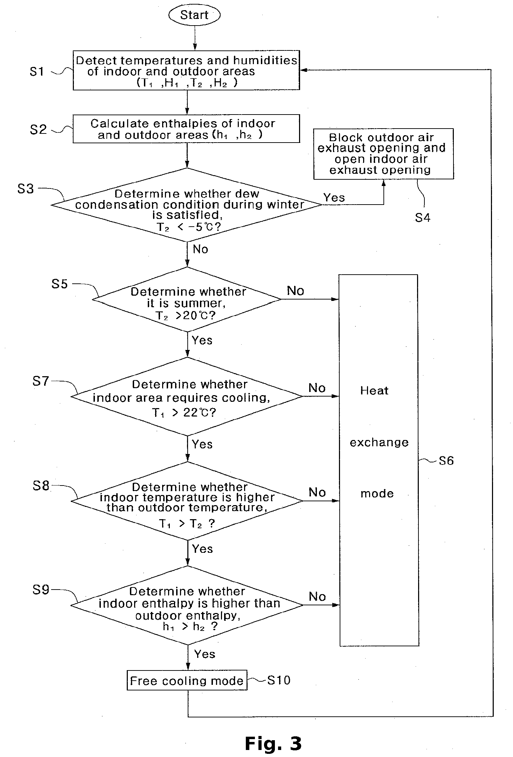

FIG 2 is a view of a total heat exchange type ventilating apparatus according to the present invention. FIG. 3 is a control block diagram of the total heat exchange type ventilating apparatus according to the present invention. FIG. 4 is a flowchart showing a method of controlling a total heat exchange type ventilating apparatus according to the present invention.

Referring to FIG 2, the total heat exchange type ventilating apparatus 100 according to the present invention comprises the same elements as in the total heat exchange type ventilating apparatus 1 according to the conventional art, that is, a first air exhaust chamber 30 and a second air exhaust chamber 40, a first air supply chamber 10 and a second air supply chamber 20, a total heat exchanger 50, and a bypass pipe 60, and may also comprise the same elements such as an indoor air suction opening 32 and an indoor air exhaust opening 42, an outdoor air suction opening 12 and an outdoor air exhaust opening 22, and an air exhaust blower 45 and an air supply blower 25.

However, the total heat exchange type ventilating apparatus 1 according to the conventional art only compares indoor and outdoor temperatures with each other to selectively control an air passage of outdoor air introduced into an indoor area from a heat exchanging mode or a free cooling mode, whereas the total heat exchange type ventilating apparatus 100 according to the present invention comprises a first temperature sensor 31 for detecting a temperature of indoor air and a first humidity sensor 33 for detecting a humidity of indoor air, a second temperature sensor 11 for detecting a temperature of outdoor air and a second humidity sensor 13 for detecting a humidity of outdoor air, and a control unit 70 for calculating enthalpies of indoor air and outdoor air from the temperatures and humidities of the indoor air and outdoor air and comparing the magnitudes of the calculated enthalpies of the indoor air and outdoor air to selectively control an introduction path of the outdoor air by selecting a heat exchange mode or a free cooling mode.

Here, it is preferable that the first temperature sensor 31 and the first humidity sensor 33 are installed in an air passage of the indoor air suction opening 32 which is located at the closest position to the indoor area among the elements of the total heat exchange type ventilating apparatus 100 to detect a temperature T1 and humidity H1 of the indoor air, and the second temperature sensor 11 and the second humidity sensor 13 are installed in an air passage of the outdoor air suction opening 12 which is located at the closest position to the outdoor area among the elements of the total heat exchange type ventilating apparatus 100 to detect a temperature T2 and humidity H2 of the outdoor air

However, the locations where the first temperature sensor 31 and the first humidity sensor 33, and the second temperature sensor 11 and the second temperature sensor 13 are installed are not limited to the air passages of the indoor air suction opening 32 and the outdoor air suction opening 12, in which case the first temperature sensor 31 and the first humidity sensor 33 may be installed in a room controller mounted in the indoor area or an air passage of a duct and the second temperature sensor 11 and the second humidity sensor 13 may be installed in a hood through which outdoor air is introduced from the outside.

In this way the present invention detects both indoor and outdoor temperatures and humidities and calculates an indoor enthalpy h1 and an outdoor enthalpy h2 on which both the indoor and outdoor temperatures and humidities are reflected, respectively.

Here, since a state of a simple compressive system can be represented by two independent intensive propertics, an enthalpy h can be calculated as an example by using a known psychrometric chart while a temperature T and a humidity H are taken as basic parameters in the present exemplary embodiment.

Referring to FIGS. 2 and 3, the control arrangement of the total heat exchange type ventilating apparatus 100 according to the present invention comprises a first temperature sensor 31 for detecting a temperature T1 of indoor air and a first humidity sensor 33 for detecting a humidity H1 of indoor air introduced through an indoor air suction opening 32, a second temperature sensor 11 for detecting a temperature T2 of outdoor air and a second humidity sensor 13 for detecting a humidity H2 of outdoor air introduced through an outdoor air suction opening 12, a mode selecting unit 80 having a heat exchange mode 81 in which the outdoor air introduced through the outdoor air suction opening 12 exchanges heat with a total heat exchanger 50 and is introduced into an indoor area through the outdoor air exhaust opening 22 and a free cooling mode 82 in which the outdoor air introduced through the outdoor air suction opening 12 is directly introduced through the outdoor air exhaust opening 22 through a bypass pipe 60 without passing through the total heat exchanger 50, and a control unit 70 for calculating an enthalpy h1 of indoor air and an enthalpy h2 of outdoor air from information of the temperature T1 of the indoor air detected by the first temperature sensor 31 and humidity H1 of the indoor air detected by the first humidity sensor 33 and from information of the temperature T2 of the outdoor air detected by the second temperature sensor 11 and humidity H2 of the outdoor air detected by the second humidity sensor 13.

The control unit 70 compares the magnitudes of the enthalpy h1 of the indoor air and the enthalpy h2 of the outdoor air, which have been calculated, with each other to control the free cooling mode 82 to be operated when the enthalpy h1 of the indoor air is larger than the enthalpy h2 of the outdoor air and to control the heat exchange mode 81 to be operated when the enthalpy h2 of the outdoor air is larger than the enthalpy h1 of the indoor air.

Meanwhile, the control unit 70 includes a configuration for controlling an operation of the total heat exchange type ventilating apparatus 100, considering indoor and outdoor conditions in addition to comparing the magnitudes of the enthalpies of the indoor and outdoor areas.

A method of controlling the total heat exchange type ventilating apparatus 100 according to the present invention will be described with reference to FIG 4.

First, a temperature T1 and humidity H1 of an indoor area are detected by a first temperature sensor 31 and a temperature T2 and humidity H2 of an outdoor area are detected by a first temperature sensor 31 and a first humidity sensor 33, and a second temperature sensor 11 and a second humidity sensor 13 (S1, step 1).

An enthalpy h1 of the indoor area is calculated from information regarding the temperature T1 and humidity H1 of the indoor area and an enthalpy h2 of the outdoor area is calculated from information regarding the temperature T2 and humidity H2 of the outdoor area, by using a known psychrometric chart (S2, step 2).

Next, it is determined whether a dew condensation condition in winter is satisfied (S3), and in the present exemplary embodiment, if the temperature T2 of the outdoor air is lower than 5°C, it is considered that a dew condensation condition is satisfied. In a state where a dew condensation condition is satisfied, outdoor air at low temperature is prevented from being introduced into an indoor area by blocking an outdoor air exhaust opening 22 and opening an indoor air exhaust opening 42 (S4).

Here, if the dew condensation condition is not satisfied, it is determined in the next step whether it is summer (S5, step A), and in the present exemplary embodiment, when the temperature T2 of the outdoor air exceeds 20°C, it is considered that the condition is satisfied and the step proceeds to the next step. However, when the temperature T2 of the outdoor air is less than 20°C, a heat exchange mode S6 is implemented.

Next, it is determined whether the indoor area requires to be cooled (S7, step B), and in the present exemplary embodiment, when the temperature T1 of the indoor air exceeds 22°C, it is considered that the condition is satisfied and the step proceeds to the next step. However, when the temperature T1 of the indoor area is less than 22°C, the heat exchange mode S6 is implemented.

In the next step, it is determined whether the temperature T1 of the indoor air is higher than the temperature T2 of the outdoor air (S8, step C), and when the temperature T1 of the indoor air is higher than the temperature T2 of the outdoor air, it is considered that the condition is satisfied and the step proceeds to the next step. However, when the temperature T1 of the indoor air is lower than the temperature T2 of the outdoor air, the heat exchange mode S6 is implemented.

Next, it is determined whether the enthalpy h1 of the indoor air is higher than the enthalpy h2 of the outdoor air (S9, step 3), and when the enthalpy h1 of the indoor air is higher than the enthalpy h2 of the outdoor air, the free cooling mode is controlled to be operated (S10), and when the enthalpy h1 of the indoor air is lower than the enthalpy h2 of the outdoor air, the heat exchange mode S6 is implemented.

In addition, the control steps are continuously repeated in sequence during the operation of the total heat exchange type ventilating apparatus 100.

As mentioned above, the present invention detects the temperatures and humidity of indoor and outdoor areas to calculate enthalpies, and compares the magnitudes of the enthalpies to selectively control the mode of the air passage through which outdoor air is introduced into an indoor area from a heat exchange mode or a free cooling mode, making it possible to ventilate air optimally by considering the temperatures and humidities of the indoor and outdoor areas. Further, in addition to comparing the magnitudes of the enthalpies, it is also determined whether a dew condensation condition of winter is satisfied, whether it is summer, whether the indoor area requires cooling, and whether the temperature of the indoor area is higher than the temperature of the outdoor area, making it possible to regulate the temperature and humidity of the indoor air to provide an optimum ventilation state.

It will be easily understood by those skilled in the art to which the present invention pertains that the present invention is not limited to the exemplary embodiments and may be variously modified without departing from the scope of the present invention.

## Claims

1. A total heat exchange type ventilating apparatus, comprising:
a first air exhaust chamber (30) into which indoor air is introduced through an indoor air suction opening (32);
a second air exhaust chamber (40) from which the indoor air that is passed through the first air exhaust chamber (30) is exhausted to the outdoor area through an indoor air exhaust opening (42);
a first air supply chamber (10) into which outdoor air is introduced through an outdoor air suction opening (12);
a second air supply chamber (20) from which the outdoor air that is passed through the first air supply chamber (10) is exhausted through an outdoor air exhaust opening (22);
a total heat exchanger (50) exchanging heat between the indoor air introduced from the first air exhaust chamber (30) to the second air exhaust chamber (40) and the outdoor air introduced from the first air supply chamber (10) to the second air supply chamber (20);
a bypass pipe (60) connected between the outdoor air suction opening (12) and the outdoor air exhaust opening (22) to form an air passage so that the outdoor air can be directly introduced into the indoor area without passing through the total heat exchanger (50) during free cooling;
a first temperature sensor (31) for detecting a temperature of the indoor air and
a first humidity sensor (33) for detecting a humidity of the indoor air; and
a second temperature sensor (11) for detecting a temperature of the outdoor air and
a second humidity sensor (13) for detecting a humidity of the outdoor air; and
a control unit (70) for calculating enthalpies of the indoor air and the outdoor air from the temperatures and humidities of the indoor air and the outdoor air, and comparing the magnitudes of the enthalpies of the indoor air and the outdoor air to control an intake path of the outdoor air to be selected from a heat exchange mode or a free cooling mode.

2. The total heat exchange type ventilating apparatus of claim 1, wherein the first temperature sensor (31) and the first humidity sensor (33) are installed in an air passage of the indoor air suction opening (32), and the second temperature sensor (11) and the second humidity sensor (13) are installed in an air passage of the outdoor air suction opening (12).

3. A method of controlling a total heat exchange type ventilating apparatus, comprising:
(1) detecting temperatures and humidities of indoor air and outdoor air;
(2) calculating enthalpies of the indoor air and the outdoor air from the temperatures and humidities of the indoor air and the outdoor air;
(3) comparing the magnitudes of the enthalpy of the indoor air and the enthalpy of the outdoor air; and
(4) controlling such that in the result of comparing the magnitudes of the enthalpies, when the enthalpy of the indoor air is higher than the enthalpy of the outdoor air, free cooling where the outdoor air is directly introduced into an indoor area via a bypass filter (60) is performed, and when the enthalpy of the indoor air is lower than the enthalpy of the outdoor air, the outdoor air is heat-exchanged through the total heat exchanger (50) and is introduced into the indoor area.

4. The method of claim 3, further comprising:
determining whether a dew condensation condition during winter is satisfied, between step (2) and step (3),
wherein if the dew condensation condition is satisfied, the outdoor air is blocked from being introduced into the indoor area and the indoor air is allowed to be exhausted to the outdoor area.

5. The method of claim 4, wherein if the dew condensation condition is not satisfied in determining whether the dew condensation condition during winter is satisfied, the method further comprises:
(A) determining whether it is summer;
(B) determining whether the indoor area requires cooling; and
(C) determining whether the indoor temperature is higher than the outdoor temperature, and
if all the conditions are satisfied in steps (A) to (C), free cooling is performed, and if any one of the conditions is not satisfied in steps (A) to (C), the outdoor air is introduced into the indoor area after exchanging heat.
